# EUROPÄISCHE PATENTSCHRIFT

(11) **EP 1 064 833 B1**
(45) Veröffentlichungstag und Bekanntmachung des Hinweises auf die Patenterteilung: **02.11.2005**
(21) Anmeldenummer: 00112229.0
(22) Anmeldetag: 07.06.2000
(51) Int. Cl.: A01C 7/10, A01C 7/12, A01C 7/08

(54) **Sägerät**
Sowing device
Semoir

(30) Priorität: 28.06.1999 US 340968
(43) Veröffentlichungstag der Anmeldung: 03.01.2001
(73) Patentinhaber: DEERE & COMPANY, Moline, Illinois 61265-8098 (US)
(72) Erfinder: Gregor, David Walter, Davenport, IA 52806 (US); Detrick, Steve Blaine, Davenport, 52806 (US)
(74) Vertreter: Holst, Sönke

(56) Entgegenhaltungen:
- US-A- 5 847 389
- US-A- 5 855 303

## Beschreibung

Die Erfindung betrifft ein Messsystem für ein Sägerät, mit einer Messkammer, die einen Einlasskanal zur Aufnahme von Produkt und einen Auslasskanal zum Abgeben abgemessenen Produkts aufweist, wobei ein drehbares Messelement, insbesondere ein Messzylinder, in der Messkammer angeordnet ist, und ein entsprechendes Sägerät.

Pneumatische Sägeräte werden gewöhnlich von Traktoren gezogen und bringen Saat und/oder Dünger auf einem Feld aus. Beispielsweise kann ein pneumatisches Sägerät in Kombination mit einem dahinter laufenden Bodenbearbeitungsgerät über ein Feld gezogen werden, um Saat und Dünger unter die Bodenoberfläche zu bringen. Ein pneumatisches Sägerät hat als Hauptbauelement einen Ausbringgutwagen mit Rädern, der einen oder mehrere an einem Rahmen befestigte(n) Produkttank (s) zur Aufnahme von Produkten aufweist, bei denen es sich in der Regel um Saatgut und/oder Dünger handelt. Pneumatische Sägeräte weisen im Allgemeinen außerdem jeweils einem Produkttank zugeordnete Messsysteme auf, um aus dem jeweiligen Tank abgemessene Produkte einem pneumatischen Verteilersystem zuzuführen, das die abgemessenen Produkte dem Boden zuführt.

Typischerweise sind pneumatische Sägeräte mit volumetrischen Messsystemen versehen, die ein festgelegtes Volumen an Saatgut pro zurückgelegter linearer Längeneinheit abmessen. Diese volumetrischen Messsysteme weisen typischerweise entweder Schneckenförderer oder ausgekehlte Zylinder (Messwalzen) auf. Die Messsysteme drehen sich, um abgemessene Produkte in ein pneumatisches Verteilersystem einzubringen. Das pneumatische Verteilersystem eines pneumatischen Sägeräts weist im Allgemeinen ein Gebläse auf, um wenigstens einen Luftstrom bereitzustellen, der durch das pneumatische Verteilersystem bis zu Säscharen strömt, wo das Produkt im Boden abgelegt wird. Abgemessene Produkte werden mittels eines pneumatischen Primärverteilers, der unterhalb des Messsystems angeordnet ist, in den Luftstrom eingebracht. Die Produkte werden durch den Luftstrom durch Verteilerleitungen zu einer Reihe von Sekundärverteilern (sogenannte Kopfstücke oder Header) verbracht, die wiederum die Produkte durch einzelne Leitungen auf Säschare verteilen, welche Furchen- oder Bodenöffnern des Bodenbearbeitungsgeräts nachlaufen.

Bei derzeit verfügbaren pneumatischen Sägeräten ist keine Möglichkeit vorgesehen, den Produktfluss im Messsystem zu erfassen. Bei mit Druck beaufschlagten Systemen muss der Produkttank des Sägeräts unter Druck gesetzt werden, um das Produkt korrekt abzumessen. Wenn ein Druckverlust im Tank eintritt, würde der Fluss des abgemessenen Produkts verlangsamt oder sogar angehalten. Gegenwärtige Sensoren erfassen den Produktfluss stromab der Verteiler, wie beispielsweise in der US 5 847 389 A beschrieben. Bei Anwendungen, in denen zwei Produkte aus getrennten Tanks an unterschiedlichen Stellen in eine einzelne Reihe von Rohren abgemessen werden, kann der Produktfluss aus einzelnen Messsystemen nicht erfasst werden, da die Messsysteme an denselben Luftleitungen angeschlossen sind. Ein Messsystem kann das Abmessen des Produkts abbrechen, während andere ordnungsgemäß weiter funktionieren, so dass dem Bediener keine Warnung gegeben wird, dass der Fluss eines Produkts verlangsamt oder unterbrochen ist, da der Fluss von den anderen Messsystemen fortdauert.

Das der Erfindung zu Grunde liegende Problem wird darin gesehen, eine verbesserte Überwachung der Funktion des Messsystems zu ermöglichen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Messsystem eines (insbesondere pneumatischen) Sägeräts ist vertikal zwischen einem Produkttank und einem Primärverteiler angeordnet. Das Messsystem weist einen Einlasskanal und einen Auslasskanal auf. Produkt aus dem Produkttank wird im Einlasskanal aufgenommen, von wo es der Messkammer zugeführt wird. Ein Messzylinder ist in der Messkammer angeordnet, um das vom Produkttank kommende Produkt abzumessen. Der Messzylinder kann eine ausgekehlte Walze oder ein Schneckenförderer sein. Nachdem das Produkt abgemessen wurde, wird es durch einen Auslasskanal dem Primärverteiler zugeführt. Insbesondere optische Sensoren für an ihnen vorbeiströmendes Produkt sind stromauf des Primärverteilers im Auslasskanal angeordnet, um den ordnungsgemäßen Betrieb des Messsystems zu überwachen.

Auf diese Weise erhält man dadurch, dass man einen Sensor stromauf des Primärverteilers anordnet, eine verbesserte Überwachung des Messsystems.

In der Zeichnung ist ein nachfolgend näher beschriebenes Ausführungsbeispiel der Erfindung dargestellt. Es zeigt:
- Fig. 1: eine Seitenansicht eines pneumatischen Sägerätes, und

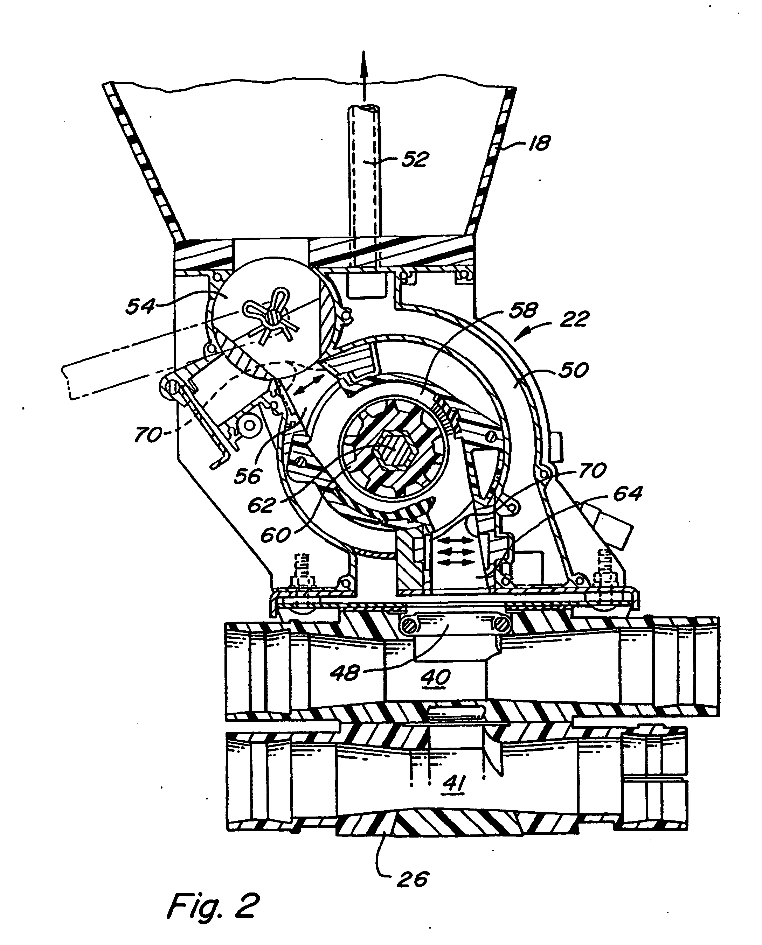

- Fig. 2: eine Querschnitt durch ein Messsystem und einen Primärverteiler.

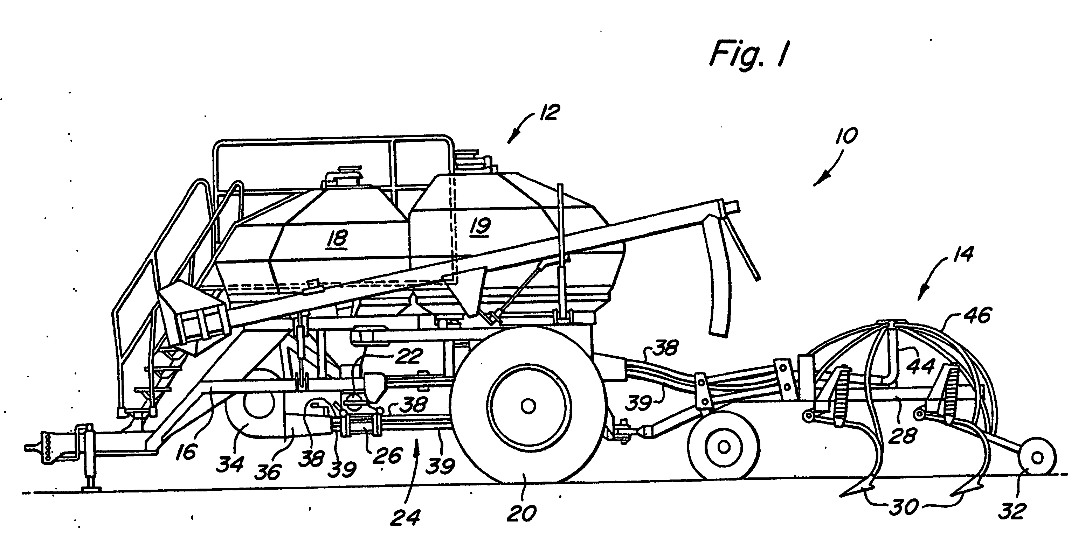

Wie in Figur 1 dargestellt, umfasst ein pneumatisches Sägerät 10 einen Ausbringgutwagen 12 und ein Bodenbearbeitungsgerät 14. Der Ausbringgutwagen 12 wird in der Regel mittels eines Traktors über ein Feld gezogen, auf dem Saatgut auszubringen ist. Der Ausbringgutwagen 12 hat einen Rahmen 16, der einen ersten Produkttank 18 und einen zweiten Produkttank 19 trägt. Räder 20 sind drehbar am Rahmen 16 befestigt. Beide Produkttanks 18 und 19 sind mit identischen Messsystemen 22 und Primärverteilern 26 ausgestattet. Nur das dem Produkttank 18 zugeordnete Messsystem 22 und der zugehörige Primärverteiler 26 sind dargestellt. Beide Messsysteme 22 sind unterhalb der Produkttanks 18, 19 angeordnet und werden mit Produkten daraus beaufschlagt, um die Produkte in gesteuerter Weise in ein pneumatisches Verteilersystem 24 einzuführen. Die pneumatischen Primärverteiler 26 sind unter den Messsystemen 22 angeordnet. Beide Primärverteiler 26 sind Teil des pneumatischen Verteilersystems 24. Figur 1 stellt ein sogenanntes Double Shot-Sägerät dar, bei dem ein erstes, im Produkttank 18 enthaltenes Produkt in den oberen Bereich des Luftstroms und das im zweiten Tank 19 enthaltene Produkt in den unteren Bereich des Luftstroms geleitet wird. Das Bodenbearbeitungsgerät 14 wird vom Ausbringgutwagen 12 gezogen und umfasst einen Rahmen 28, an dem Boden- oder Furchenöffner 30 befestigt sind. Das Bodenbearbeitungsgerät 14 kann auch mit Vorrichtungen zum Schließen der Furche ausgestattet sein, wie beispielsweise Schließrädern oder Verdichtern 32.

Das pneumatische Verteilersystem 24 führt abgemessene Produkte aus den Produkttanks 18, 19 den Furchenöffnern 30 zu. Die in den Produkttanks 18, 19 enthaltenen Produkte können Saat, Dünger oder andere granulare (kornförmige) Produkte sein. Das pneumatische Verteilersystem 24 umfasst ein Gebläse 34, das durch einen hydraulischen Motor angetrieben wird, und einen Strom druckbeaufschlagter Luft durch eine verstellbare Luftkammer 36 leitet. Die Luftkammer 36 leitet den von ihr umgeformten Luftstrom in eine obere Reihe von Rohren 38 und in eine untere Reihe von Rohren 39. Typischerweise umfassen beide Reihen von Rohren mehrere Rohre zur Aufnahme abgemessener Produkte. Die obere Reihe von Rohren 38 leitet den oberen Bereich des Luftstroms in eine obere Reihe von Venturirohren 40 im den Primärverteilern 26, die den Produkttanks 18, 19 zugeordnet sind. In ähnlicher Weise leitet die untere Reihe von Rohren 39 den unteren Bereich des Luftstroms in eine untere Reihe von Venturirohren 41 in den Primärverteilern 26.

Jedes der Rohre 38 der oberen Reihe erstreckt sich vom Primärverteiler 26, der dem Produkttank 19 zugeordnet ist, nach hinten bis zu jeweils einem Sekundärverteiler 44. Jeder der Sekundärverteiler 44 weist einzelne Rohre 46 auf, die sich bis zu den Furchenöffnern 30 erstrecken. In ähnlicher Weise erstreckt sich jedes Rohr der unteren Reihe von Rohren 39 vom Primärverteiler 26, der dem Tank 19 zugeordnet ist, bis zu einem einzelnen Sekundärverteiler 44. Die Sekundärverteiler 44 sind identisch und umfassen ein sich nach oben erstreckendes Rohr, das ein Kopfteil aufweist, der die im Luftstrom enthaltenen Produkte durch die einzelnen Rohre 46 auf die einzelnen Furchenöffner 30 verteilt.

Produkte aus den Produkttanks 18 und 19 werden durch die jeweiligen Messsysteme 22 abgemessen. Die Produkte treten durch die Venturirohre 40 oder 41 in den Luftstrom ein. Die Primärverteiler 26 sind mit einem ersten Auswahlventil 48 versehen, das zwischen dem ersten Messsystem 22 und den Venturirohren 40 und 41 angeordnet ist, um wahlweise Produkte entweder in die obere Reihe von Venturirohren 40 oder die untere Reihe von Venturirohren 41 zu leiten. Beispielsweise kann Produkt aus dem Produkttank 18 in den oberen Luftstrom und Produkt aus Produkttank 19 geleitet werden, wie durch die Position des Auswahlventils 48 vorgegeben wird.

Unter Druck stehende Luft aus den Luftströmen wird verwendet, um die Produkttanks 18, 19 unter Druck zu setzen. Im konkreten wird ein Teil des Luftstroms durch einen Kanal 50 im Messsystem 22 und in das Rohr 52 geleitet, um den Produkttank 18 unter Druck zu setzen.

Produkt aus Produkttank 18 wird an dem Absperrventil 54 vorbei durch einen Einlasskanal 56 in eine Messkammer 58 geleitet, in der ein ausgekehlter Zylinder 60 ist, welcher durch eine Sechskantwelle 62 angetrieben wird. Das abgemessene Produkt wird durch einen Auslasskanal 64 abhängig von der Stellung des Auswahlventils 48 einem der Venturirohre 40 oder 41 zugeführt.

Optische Sensoren 70 können im Einlasskanal 56 oder im Auslasskanal 64 angeordnet sein, um den Durchgang des Produkts durch diese Kanäle zu erfassen. Der Auslasskanal 64 ist die wünschenswertere Position, da ein in diesem Kanal angeordneter Sensor den Produktfluss vom Messsystem 22 zum pneumatischen Verteilersystem 24 erfasst. Die Sensoren können von dem Typ sein, der in der US 5 650 609 A oder der US 5 847 389 A offenbart ist, die durch Verweis hierin aufgenommen werden.

Die Erfindung beschränkt sich nicht auf die oben beschriebene Ausführungsform, sondern wird durch die folgenden Ansprüche definiert.

## Patentansprüche

1. Messsystem (22) für ein Sägerät (10), mit einer Messkammer (58), die einen Einlasskanal (56) zur Aufnahme von Produkt und einen Auslasskanal (64) zum Abgeben abgemessenen Produkts aufweist, wobei ein drehbares Messelement, insbesondere ein Messzylinder (60), in der Messkammer (58) angeordnet ist, **dadurch gekennzeichnet, dass** ein Sensor (70) zum Erfassen des Durchgangs von Produkt im Auslasskanal (64) des Messsystems (22) angeordnet ist.

2. Messsystem nach Anspruch 1, **dadurch gekennzeichnet, dass** der Sensor (70) ein optischer Sensor ist.

3. Pneumatisches Sägerät (10), mit einem Produkttank (18, 19), aus dem Produkt einem Messsystem (22) mit einer Messkammer (58) zuführbar ist, wobei das Messsystem (22) eingerichtet ist, abgemessenes Produkt einem Primärverteiler (26) zuzuführen, und mit einem Sensor (70) zum Erfassen des Durchgangs von Produkt, **dadurch gekennzeichnet, dass** der Sensor (70) zum Erfassen des Durchgangs von Produkt im Auslasskanal (64) des Messsystems (22) angeordnet ist.

4. Sägerät nach Anspruch 3, **dadurch gekennzeichnet, dass** der Sensor (70) ein optischer Sensor ist.

5. Sägerät nach einem der Ansprüche 3 oder 4, **dadurch gekennzeichnet, dass** in einer Messkammer (58) ein Messelement, insbesondere ein ausgekehlter Messzylinder (60) zum Abmessen von Produkt angeordnet ist.

6. Sägerät nach einem der Ansprüche 3 bis 5, **dadurch gekennzeichnet, dass** der Produkttank (18, 19) unter Überdruck steht.

## Claims

1. A metering system (22) for a seeder (10), with a metering chamber (58) which has an inlet channel (56) for reception of product and an outlet channel (64) for delivering metered product, wherein a rotatable metering element, in particular a metering cylinder (60), is arranged in the metering chamber (58), **characterized in that** a sensor (70) for detecting the passage of product is arranged in the outlet channel (64) of the metering system (22).

2. A metering system according to claim 1, **characterized in that** the sensor (70) is an optical sensor.

3. A pneumatic seeder (10), with a product tank (18, 19), from which product can be fed to a metering system (22) with a metering chamber (58), wherein the metering system (22) is arranged to feed metered product to a primary distributor (26), and with a sensor (70) for detecting the passage of product, **characterized in that** the sensor (70) for detecting the passage of product is arranged in the outlet channel (64) of the metering system.

4. A seeder according to claim 3, **characterized in that** the sensor (70) is an optical sensor.

5. A seeder according to claim 3 or 4, **characterized in that** a metering element, in particular a grooved metering cylinder (60) is arranged in a metering chamber (58) for metering product.

6. A seeder according to any of claims 3 to 5, **characterized in that** the product tank (18, 19) is under excess pressure.

## Revendications

1. Système de dosage (22) pour un semoir (10), comportant une chambre de dosage (58), qui est munie d'un canal d'entrée (56) destiné à recevoir le produit et d'un canal de sortie (64) destiné à évacuer le produit dosé, un élément de dosage rotatif, en particulier un cylindre de dosage (60), étant agencé dans la chambre de dosage (58), **caractérisé en ce qu'**un capteur (70) destiné à détecter le passage du produit est monté dans le canal de sortie (64) du système de dosage (22).

2. Système de mesure selon la revendication 1, **caractérisé en ce que** le capteur (70) est un capteur optique.

3. Semoir pneumatique (10), comportant une trémie pour produit (18, 19) à partir de laquelle le produit est acheminé vers un système de dosage (22) muni d'une chambre de dosage (58), le système de dosage (22) étant conçu pour acheminer le produit dosé vers un distributeur primaire (26), et comportant un capteur (70) destiné à détecter le passage du produit, **caractérisé en ce que** le capteur (70) destiné à détecter le passage du produit est monté dans le canal de sortie (64) du système de dosage (22).

4. Semoir selon la revendication 3, **caractérisé en ce que** le capteur (70) est un capteur optique.

5. Semoir selon la revendication 3 ou 4, **caractérisé en ce qu'**un élément de dosage, en particulier un cylindre de dosage (60) cannelé, est monté dans une chambre de dosage (58) en vue de doser le produit.

6. Semoir selon l'une quelconque des revendications 3 à 5, **caractérisé en ce que** la trémie pour produit (18, 19) est mise en surpression.
